# EUROPEAN PATENT SPECIFICATION

(11) **EP 4 404 021 B1**
(45) Date of publication and mention of the grant of the patent: **03.12.2025**
(21) Application number: 22869839.5
(22) Date of filing: 02.09.2022
(51) Int. Cl.: G05B 19/418, G05D 1/667, G05B 23/02

(54) **AUTOMATIC TRANSPORT DEVICE, TRANSPORT SYSTEM, AND METHOD OF NOTIFYING ABNORMALITY IN AUTOMATIC TRANSPORT DEVICE**
AUTOMATISCHE TRANSPORTVORRICHTUNG, TRANSPORTSYSTEM UND VERFAHREN ZUR MELDUNG VON ANOMALIEN IN EINER AUTOMATISCHEN TRANSPORTVORRICHTUNG
DISPOSITIF DE TRANSPORT AUTOMATIQUE, SYSTÈME DE TRANSPORT ET PROCÉDÉ DE NOTIFICATION D'ANOMALIE DANS UN DISPOSITIF DE TRANSPORT AUTOMATIQUE

(30) Priority: 15.09.2021 JP 2021150353
(43) Date of publication of application: 24.07.2024
(73) Proprietor: Amada Co., Ltd., Isehara-shi, Kanagawa 259-1196 (JP)
(72) Inventor: NARAHARA Akio, Isehara-shi, Kanagawa 259-1196 (JP); TOMIMATSU Atsushi, Isehara-shi, Kanagawa 259-1196 (JP); KITAMURA Chiaki, Isehara-shi, Kanagawa 259-1196 (JP)
(74) Representative: Grünecker Patent- und Rechtsanwälte PartG mbB
(86) International application number: PCT/JP2022/033160
(87) International publication number: WO 2023/042692

(56) References cited:
- JP-A- 2015 156 182
- JP-A- 2018 116 839
- JP-A- H0 457 658
- JP-U- 3 144 158
- US-A1- 2019 243 374
- US-A1- 2021 256 779

## Description

### [TECHNICAL FIELD]

The present disclosure relates to an automated guided vehicle, a conveying system, and an abnormality notification method of an automated guided vehicle.

### [BACKGROUND ART]

In facilities such as many factories and warehouses, the operation of carrying products and loads is performed using an automated guided vehicle (AGV), which is a vehicle that travels autonomously. By performing the carrying operation using an automated guided vehicle, time and costs for workers can be reduced, and operation efficiency can be improved.

When an automated guided vehicle with a load loaded thereon is traveling, if an abnormality such as a load collapse occurs, the abnormality is detected by a sensor mounted on the automated guided vehicle, and the automated guided vehicle automatically stops traveling. When the automated guided vehicle stops automatically, a worker performs a restoration operation according to the details of the abnormality, and accordingly the automated guided vehicle can resume traveling.

In a facility such as a large warehouse, the operation of equipment is automated, and the inside of the facility is in an unmanned state. In this kind of facility, a management device centrally manages the operation status of an automated guided vehicle traveling inside the facility. Due to the management device wirelessly communicating information with the automated guided vehicle in the warehouse, when an abnormality occurs in the automated guided vehicle and the automated guided vehicle stops, the management device detects the abnormality, outputs an alarm, and prompts a worker to perform a restoration operation.

However, if a management device manages the operation of all automated guided vehicles in a facility, there have been problems that the configuration of the system becomes complicated, and the cost for system construction and system management becomes high. In addition, if the size of a facility is large, there have been problems that it takes time for workers to reach a stopped automated guided vehicle, and a long time is required for the restoration operation for the automated guided vehicle.
US 2019/243374 A1 relates to a carrier having the ability to travel autonomously and includes a holding mechanism for holding a burden. A sensor is provided for detecting a surrounding situation. The detected information is output to a management device that manages operation of another carrier.
JP 3144158 U relates to a bumper switch that can collect information on operation information, failure, and the like accompanying collision detection and traveling.

### [Citation List]

### [Patent Literature]

[Patent Literature 1] Japanese Unexamined Patent Application Publication No. Hei 10-124145

### [SUMMARY OF THE INVENTION]

In a sheet metal processing facility, there are processing machines for which workers are arranged during operation, depending on the content of the processing. Therefore, if an abnormality occurs in an automated guided vehicle used in the sheet metal processing facility and the vehicle stops, it is possible to promptly cause the automated guided vehicle to resume traveling by notifying a worker in the facility of the occurrence of the abnormality and prompting the worker to perform a restoration operation.

As means for notifying a worker in a facility of the occurrence of an abnormality in an automated guided vehicle, there is a technology for notifying others of the occurrence of the abnormality by sounding an alarm or lighting a lamp by an alarm device mounted on the automated guided vehicle. In addition, there is a technology for causing a display device of the automated guided vehicle to display the details of a restoration operation performed by a worker (see Patent Literature 1). In this way, by outputting information on the abnormality that has occurred in the automated guided vehicle, a worker in the periphery of the vehicle can perceive the abnormality in the automated guided vehicle and perform a restoration operation.

However, in a sheet metal processing facility, there are positions where workers are arranged and positions where no workers are arranged depending on the types of sheet metal processing machines, and in some places, even if an automated guided vehicle lights a lamp or displays information, workers may not be able to perceive the lamp or the information. In addition, in a sheet metal processing facility, there is a lot of noise caused by processing operations, and even if an automated guided vehicle sounds an alarm, workers may not be able to perceive the alarm. In such a case, there has been a problem that it takes a long time to restore a stopped automated guided vehicle.

The present invention provides an automated guided vehicle according to claim 1, a conveying system according to claim 4 and an abnormality notification method of an automated guided vehicle according to claim 5, which, when an abnormality occurs in an automated guided vehicle traveling in a sheet metal processing facility and the automated guided vehicle stops, are capable of notifying a worker in the sheet metal processing facility of the abnormal state quickly and with high accuracy.

An automated guided vehicle of one aspect of the present disclosure is an automated guided vehicle traveling in a sheet metal processing facility in which a plurality of sheet metal processing machines are installed, the automated guided vehicle comprising: an abnormality detection sensor for detecting an abnormality that has occurred while the automated guided vehicle is traveling; a notification destination specifying unit for specifying a sheet metal processing machine as a notification destination of a state of the abnormality, from the plurality of sheet metal processing machines when the abnormality detection sensor detects the abnormality; and a notification information transmission control unit for wirelessly transmitting information for notifying the state of the abnormality, to the sheet metal processing machine as the notification destination specified by the notification destination specifying unit.

A conveying system of one aspect of the present disclosure comprising: the automated guided vehicle and the plurality of sheet metal processing machines, wherein each of the plurality of sheet metal processing machines includes an output unit for outputting information transmitted from the automated guided vehicle.

An abnormality notification method of an automated guided vehicle of one aspect of the present disclosure, the automated guided vehicle traveling in a sheet metal processing facility in which a plurality of sheet metal processing machines are installed, and the abnormality notification method comprising: when an abnormality occurs while the automated guided vehicle is traveling, specifying a sheet metal processing machine as a notification destination of a state of the abnormality from the plurality of sheet metal processing machines; and wirelessly transmitting information for notifying the state of the abnormality, to the specified sheet metal processing machine as the notification destination.

According to the automated guided vehicle, the conveying system, and the abnormality notification method of the automated guided vehicle described above, when an abnormality occurs in an automated guided vehicle traveling in a sheet metal processing facility, the abnormal state can be notified to a worker in the sheet metal processing facility quickly and with high accuracy by wirelessly transmitting information for notifying the abnormal state to a sheet metal processing machine specified based on information on the sheet metal processing machine and current position information of the automated guided vehicle in the sheet metal processing facility.

According to an automated guided vehicle, a conveying system, and an abnormality notification method of an automated guided vehicle of one aspect of the present disclosure, when an abnormality occurs in an automated guided vehicle traveling in a sheet metal processing facility and the automated guided vehicle stops, it is possible to notifying a worker in the sheet metal processing facility of the abnormal state quickly and with high accuracy.

### [BRIEF DESCRIPTION OF THE DRAWINGS]

Fig. 1 is an overall view of a conveying system 1 of an embodiment.
Fig. 2 is a block diagram showing the configuration of the conveying system 1 of an embodiment.
Fig. 3 is a block diagram showing the configuration of sheet metal processing machines 20, 30, 40, and 50 of the conveying system 1 of an embodiment.
Fig. 4 is a flowchart showing the operation of an automated guided vehicle in the conveying system 1 of an embodiment.

### [MODES FOR CARRYING OUT THE INVENTION]

### <Configuration of conveying system according to an embodiment>

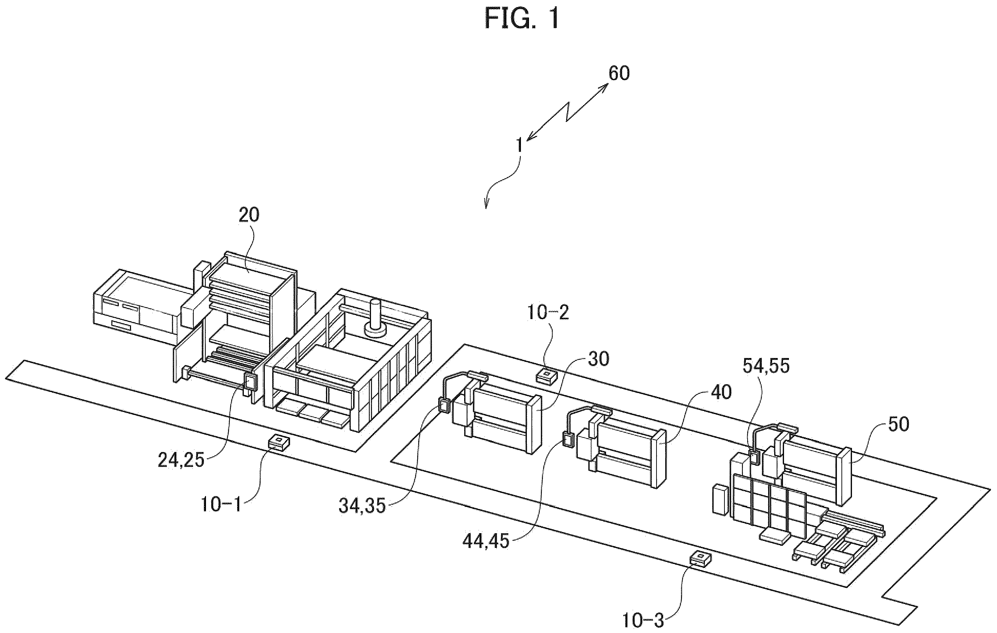

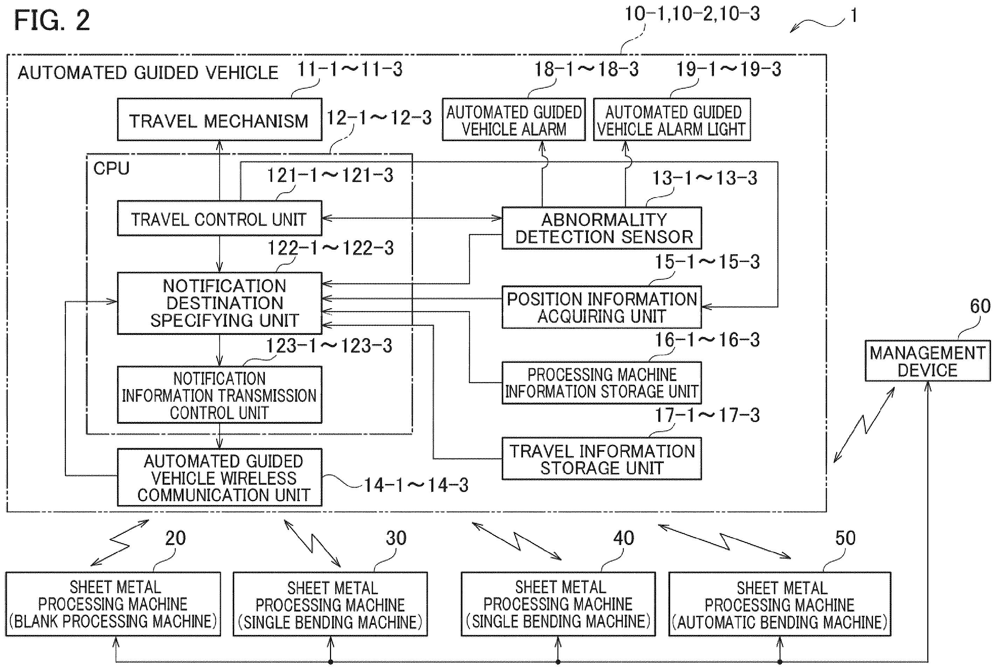

The configuration of a conveying system of an embodiment will be described below with reference to the accompanying diagrams. Fig. 1 is an overall view of a conveying system 1 of an embodiment. Fig. 2 is a block diagram showing the configuration of the conveying system 1 of an embodiment.

As shown in Fig. 1, the conveying system 1 is disposed in a sheet metal processing facility, and includes a plurality of automated guided vehicles (AGVs) 10-1, 10-2, and 10-3 performing automatic operations, sheet metal processing machines 20, 30, 40, and 50 installed in the sheet metal processing facility, and a management device 60.

As shown in Fig. 2, the automated guided vehicle 10-1 has a travel mechanism 11-1 and a central processing unit (CPU) 12-1. The travel mechanism 11-1 operates under the control performed by a travel control unit 121-1 mounted in the CPU 12-1 and loads such as parts and products to be processed are loaded onto the vehicle and the vehicle travels in the sheet metal processing facility. The travel mechanism 11-1 is a mechanism for causing the automated guided vehicle 10-1 to travel, and includes, for example, three or more wheels that support the automated guided vehicle 10-1 and can be rotated on the road surface, a driving source such as a motor for rotating and driving the wheels, a powertrain for transmitting the driving force of the driving source to the wheels, and a mechanism for controlling a traveling direction of the automated guided vehicle 10-1.

Further, the automated guided vehicle 10-1 includes: an abnormality detection sensor 13-1 for detecting an abnormality that has occurred during traveling; a notification destination specifying unit 122-1 for specifying a sheet metal processing machine as a notification destination of the abnormal state, from the plurality of sheet metal processing machines 20, 30, 40, and 50 when the abnormality is detected by the abnormality detection sensor 13-1; and a notification information transmission control unit 123-1 for causing information for notifying the abnormal state to be transmitted to the sheet metal processing machine as the notification destination specified by the notification destination specifying unit 122-1.

The abnormality detection sensor 13-1 is constituted by, for example, a light detection and ranging (LiDAR) sensor, an ultrasonic sensor, a radar sensor, or a camera device, and detects an abnormality that has occurred during traveling, such as a collapse of a load loaded onto the automated guided vehicle 10-1.

The functions of the notification destination specifying unit 122-1 and the notification information transmission control unit 123-1 are mounted in the CPU 12-1. Each component (121-1, 122-1, and 123-1) of the CPU 12-1 can be realized using a general-purpose microcomputer. Specifically, a dedicated computer program is installed on a microcomputer for execution. This enables the general-purpose microcomputer to function as a plurality of information processing units (121-1, 122-1, and 123-1). Here, an example implementation by means of the dedicated computer program and general-purpose microcomputer is shown, but it is needless to say that dedicated hardware for performing each piece of information processing can be prepared instead of the general-purpose microcomputer. Dedicated hardware includes devices such as application specific integrated circuits (ASICs) arranged to perform the functions described in an embodiment and conventional circuit components.

Further, the automated guided vehicle 10-1 includes an automated guided vehicle wireless communication unit 14-1 that performs wireless communication with the plurality of sheet metal processing machines 20, 30, 40, and 50 and the management device 60 under the control performed by the notification information transmission control unit 123-1. The automated guided vehicle wireless communication unit 14-1 can perform wireless communication via a wireless local area network (LAN) of the IEEE 802.11 standard or mobile communication, for example.

Further, the automated guided vehicle 10-1 includes a position information acquiring unit 15-1 for acquiring current position information of the host-vehicle, a processing machine information storage unit 16-1 for storing information on the plurality of sheet metal processing machines 20, 30, 40, and 50, and a travel information storage unit 17-1 for storing travel information including position information of a starting point and position information of a destination point in relation to traveling. When an abnormality is detected by the abnormality detection sensor 13-1, the notification destination specifying unit 122-1 specifies a sheet metal processing machine as the notification destination of the abnormal state, according to the current position information acquired by the position information acquiring unit 15-1, the information stored in the processing machine information storage unit 16-1, the information stored in the travel information storage unit 17-1, and operation statuses of the sheet metal processing machines 20, 30, 40, and 50.

The position information acquiring unit 15-1 performs known map matching processing or dead reckoning processing using, for example, LiDAR and acquires position information of the automated guided vehicle 10-1 in the sheet metal processing facility.

The processing machine information storage unit 16-1 and the travel information storage unit 17-1 are, for example, a memory of a general-purpose microcomputer or an auxiliary storage device (including magnetic and optical disk drives) connected to the microcomputer.

Further, the automated guided vehicle 10-1 includes an automated guided vehicle alarm 18-1 which sounds an alarm and an automated guided vehicle alarm light 19-1 which lights a lamp to notify others of the occurrence of an abnormality when the abnormality is detected by the abnormality detection sensor 13-1.

Since the automated guided vehicles 10-2 and 10-3 have the same configuration as the automated guided vehicle 10-1, a detailed description of each component thereof will be omitted.

The sheet metal processing machine 20 is a blank processing machine for cutting and piercing sheet metal. The sheet metal processing machines 30 and 40 are bending processing machines by which a worker manually performs bending processing on sheet metal. The sheet metal processing machine 50 is a bending processing machine for automatically performing bending processing on sheet metal.

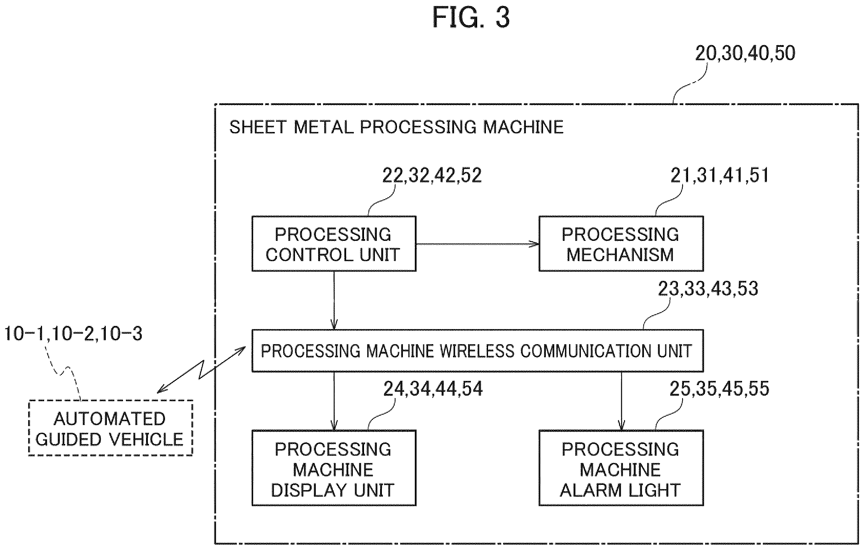

Fig. 3 is a block diagram showing the configuration of the sheet metal processing machines 20, 30, 40, and 50. The sheet metal processing machine 20 includes a processing mechanism 21, a processing control unit 22, a processing machine wireless communication unit 23, and a processing machine display unit 24 and a processing machine alarm light 25 as output units.

The processing mechanism 21 is a mechanism for processing sheet metal to be processed. The processing control unit 22 controls the operation of the processing mechanism 21. The processing machine wireless communication unit 23 performs wireless communication with the automated guided vehicles 10-1, 10-2, and 10-3. When acquiring information for notifying an abnormal state from the automated guided vehicles 10-1, 10-2, and 10-3 via the processing machine wireless communication unit 23, the processing machine display unit 24 displays text information for notifying the abnormal state of the corresponding automated guided vehicle, based on the information. When acquiring information for notifying the abnormal state from the automated guided vehicles 10-1, 10-2, and 10-3 via the processing machine wireless communication unit 23, the processing machine alarm light 25 is turned on.

Since the configuration of the sheet metal processing machines 30, 40, and 50 is the same as that of the sheet metal processing machine 20, a detailed description thereof will be omitted.

As shown in Fig. 2, the management device 60 can perform wireless communication with the automated guided vehicles 10-1, 10-2, and 10-3, and can be connected to the sheet metal processing machines 20, 30, 40, and 50 in a wired or wireless manner. The management device 60 monitors and controls the operation of the automated guided vehicles 10-1, 10-2, and 10-3, and the sheet metal processing machines 20, 30, 40, and 50.

### <Operation of conveying system 1 according to one embodiment>

Next, the operation of the conveying system 1 according to the present embodiment will be described. In the present embodiment, the processing machine information storage unit 16-1 of the automated guided vehicle 10-1, a processing machine information storage unit 16-2 of the automated guided vehicle 10-2, and a processing machine information storage unit 16-3 of the automated guided vehicle 10-3 store in advance installation position information and information on the day of the week and the time of day when a worker is present for all of the sheet metal processing machines 20, 30, 40, and 50.

In the present embodiment, the processing machine information storage units 16-1, 16-2, and 16-3 store information indicating that, for example, workers are arranged only for the sheet metal processing machines 30 and 40 and no workers are arranged for the sheet metal processing machines 20 and 50 from 9:00 to 17:00 on weekdays, and that no workers are arranged for any of the sheet metal processing machines 20, 30, 40, and 50 on weekdays from 17:00 to 9:00 the next day or on holidays.

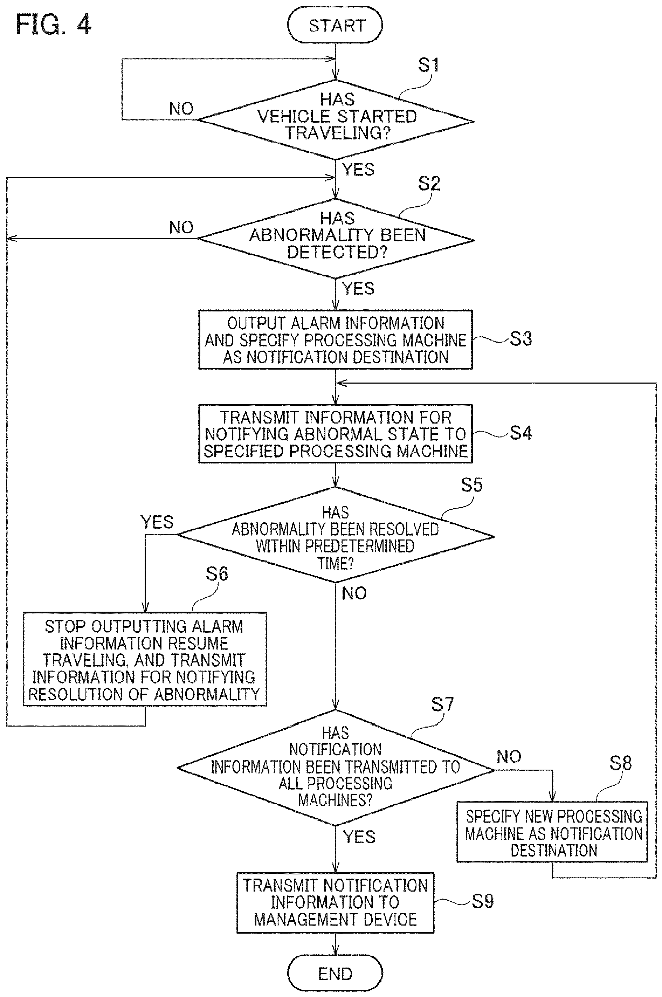

Fig. 4 is a flowchart showing the operation of the automated guided vehicles 10-1, 10-2, and 10-3 in the conveying system 1 according to one embodiment. Here, a specific description will be given regarding an example of the operation of the automated guided vehicle 10-1 traveling from a position near the sheet metal processing machine 20 to a position near the sheet metal processing machine 50.

The automated guided vehicle 10-1 stores in advance, in the travel information storage unit 17-1, as travel information, information indicating that the starting point is the position near the sheet metal processing machine 20 and the destination point is the position near the sheet metal processing machine 50. When the automated guided vehicle 10-1 starts traveling under the control performed by the travel control unit 121-1 with a processed product that has been processed by using the sheet metal processing machine 20 loaded thereon as a load ("YES" in S1), the position information acquiring unit 15-1 starts processing of acquiring position information of the host-vehicle and the abnormality detection sensor 13-1 starts processing of detecting an abnormality that has occurred in the host-vehicle.

When a load loaded onto the automated guided vehicle 10-1 collapses at the position near the sheet metal processing machine 20 while the vehicle is traveling and the vehicle stops traveling, the abnormality detection sensor 13-1 enters an ON state and the abnormality of the automated guided vehicle 10-1 is detected. When the abnormality detection sensor 13-1 detects the abnormality ("YES" in S2), alarm information is output by the automated guided vehicle alarm 18-1 sounding an alarm and the automated guided vehicle alarm light 19-1 lighting a lamp and the occurrence of the abnormality is notified to others.

Further, when the abnormality detection sensor 13-1 detects the abnormality, the notification destination specifying unit 122-1 specifies a sheet metal processing machine to be notified of the abnormal state, from the plurality of sheet metal processing machines 20, 30, 40, and 50 based on the information stored in the processing machine information storage unit 16-1 and the current position information acquired by the position information acquiring unit 15-1 (S3).

The notification destination specifying unit 122-1 specifies, as an abnormal state notification destination, a sheet metal processing machine with a higher priority in order from (1) a sheet metal processing machine installed at a position closest to the position indicated by current position information of the stopped automated guided vehicle, (2) a sheet metal processing machine for which a worker is arranged, (3) a sheet metal processing machine corresponding to a start position and a sheet metal processing machine corresponding to an end position in relation to traveling, and (4) all sheet metal processing machines in the sheet metal processing facility.

First, the notification destination specifying unit 122-1 specifies, as the notification destination of the abnormal state, (1) a sheet metal processing machine installed at a position closest to the position indicated by the current position information of the stopped automated guided vehicle, having the highest priority. Specifically, the notification destination specifying unit 122-1 specifies the sheet metal processing machine 20 as a notification destination based on installation position information of each sheet metal processing machine stored in the processing machine information storage unit 16-1 and current position information of the automated guided vehicle 10-1 acquired by the position information acquiring unit 15-1.

When the notification destination specifying unit 122-1 specifies the sheet metal processing machine 20 as the notification destination of the abnormal state, the notification information transmission control unit 123-1 causes the automated guided vehicle wireless communication unit 14-1 to transmit information for notifying the abnormal state of the automated guided vehicle 10-1 to the sheet metal processing machine 20 (S4).

The processing machine wireless communication unit 23 of the sheet metal processing machine 20 receives the information transmitted from the automated guided vehicle 10-1, the processing machine display unit 24 displays text information for notifying the abnormal state of the automated guided vehicle 10-1, based on the received information, and the processing machine alarm light 25 is turned on. The text information displayed by the processing machine display unit 24 may include the current position information of the automated guided vehicle 10-1 such as, for example, the text "a load collapse of a first automated guided vehicle unit has occurred in the periphery of the sheet metal processing machine 20".

Here, if there is a worker in the periphery of the sheet metal processing machine 20, and the worker perceives the information displayed on the processing machine display unit 24 and performs an operation of handling the abnormality of the automated guided vehicle 10-1 within a predetermined time from when the automated guided vehicle 10-1 transmits the information for notifying the occurrence of the abnormality, the abnormality of the automated guided vehicle 10-1 is resolved ("YES" in S5). When the abnormality of the automated guided vehicle 10-1 is resolved, the detection state implemented by the abnormality detection sensor 13-1 enters an OFF state.

When the detection state according to the abnormality detection sensor 13-1 enters the OFF state, the automated guided vehicle alarm 18-1 stops sounding the alarm, the automated guided vehicle alarm light 19-1 is turned off, and the travel control unit 121-1 causes the vehicle to resume traveling. Further, when the detection state implemented by the abnormality detection sensor 13-1 enters the OFF state, the notification destination specifying unit 122-1 causes information for notifying the abnormality resolution of the automated guided vehicle 10-1 to be transmitted to the sheet metal processing machine 20 to which the information for notifying the abnormal state has been transmitted (S6), and the processing returns to step S2.

The processing machine wireless communication unit 23 of the sheet metal processing machine 20 receives the information transmitted from the automated guided vehicle 10-1, the processing machine display unit 24 stops displaying the text information for notifying the abnormal state of the automated guided vehicle 10-1, based on the received information, and the processing machine alarm light 25 is turned off.

In step S5, when the abnormality of the automated guided vehicle 10-1 is not resolved within a predetermined time from when the automated guided vehicle 10-1 has transmitted the information for notifying the occurrence of the abnormality ("NO" in S5), the notification destination specifying unit 122-1 confirms whether notification information has been transmitted to all of the sheet metal processing machines 20, 30, 40, and 50 (S7).

There are sheet metal processing machines 30, 40, and 50 to which the notification information has not been transmitted at this point and the notification information has not been transmitted to all sheet metal processing machines yet ("NO" in S7), and therefore the notification destination specifying unit 122-1 performs processing of specifying a new notification-destination sheet metal processing machine (S8).

Here, the notification destination specifying unit 122-1 specifies, as a new notification destination of an abnormal state, (2) the sheet metal processing machine for which a worker is arranged, which has the next highest priority following (1). Specifically, the notification destination specifying unit 122-1 specifies the sheet metal processing machines 30 and 40 as notification destinations based on information on the day of the week and the time of day when a worker is present, stored in the processing machine information storage unit 16-1, and the current date and time information, for example, information of "13:00 on weekdays".

When the notification destination specifying unit 122-1 specifies the sheet metal processing machines 30 and 40 as new notification destinations of the abnormal state, the notification information transmission control unit 123-1 causes the automated guided vehicle wireless communication unit 14-1 to transmit information for notifying the abnormal state to the sheet metal processing machines 30 and 40 (S4).

The processing machine wireless communication unit 33 of the sheet metal processing machine 30 receives the information transmitted from the automated guided vehicle 10-1, a processing machine display unit 34 displays the text information for notifying the abnormal state of the automated guided vehicle 10-1, based on the received information, and a processing machine alarm light 35 is turned on. Further, a processing machine wireless communication unit 43 of the sheet metal processing machine 40 receives the information transmitted from the automated guided vehicle 10-1, a processing machine display unit 44 displays the text information for notifying the abnormal state of the automated guided vehicle 10-1, based on the received information, and a processing machine alarm light 45 is turned on.

Here, if there is a worker in the periphery of the sheet metal processing machine 30 or 40, and the worker perceives the displayed information and performs an operation of handling the abnormality of the automated guided vehicle 10-1 within a predetermined time from when the automated guided vehicle 10-1 transmits the information for notifying the occurrence of the abnormality, the abnormality of the automated guided vehicle 10-1 is resolved ("YES" in S5). When the abnormality of the automated guided vehicle 10-1 is resolved, the detection state implemented by the abnormality detection sensor 13-1 enters an OFF state.

When the detection state implemented by the abnormality detection sensor 13-1 enters the OFF state, the automated guided vehicle alarm 18-1 stops sounding the alarm, the automated guided vehicle alarm light 19-1 is turned off, and the travel control unit 121-1 causes the vehicle to resume traveling. Further, when the detection state implemented by the abnormality detection sensor 13-1 enters the OFF state, the notification destination specifying unit 122-1 causes information for notifying the abnormality resolution of the automated guided vehicle 10-1 to be transmitted to the sheet metal processing machines 20, 30, and 40 to which the information for notifying the abnormal state has been transmitted (S6), and the processing returns to step S2.

The processing machine wireless communication units 23, 33, and 43 of the sheet metal processing machines 20, 30, and 40 receive the information transmitted from the automated guided vehicle 10-1, the processing machine display units 24, 34, and 44 stop displaying the text information for notifying the abnormal state of the automated guided vehicle 10-1, based on the received information, and the processing machine alarm lights 25, 35, and 45 are turned off.

In step S5, if the abnormality of the automated guided vehicle 10-1 is not resolved within a predetermined time from when the automated guided vehicle 10-1 has transmitted the information for notifying the occurrence of the abnormality ("NO" in S5), the notification destination specifying unit 122-1 confirms whether the notification information has been transmitted to all of the sheet metal processing machines 20, 30, 40, and 50 (S7).

There is a sheet metal processing machine 50 to which the notification information has not been transmitted at this point, and the notification information has not been transmitted to all sheet metal processing machines yet ("NO" in S7), and therefore the notification destination specifying unit 122-1 performs processing of specifying a new notification-destination sheet metal processing machine (S8).

The notification destination specifying unit 122-1 specifies, as new notification destinations of the abnormal state, (3) a sheet metal processing machine corresponding to a start position and a sheet metal processing machine corresponding to an end position in relation to traveling, which have the next highest priority following (2) above. Specifically, the notification destination specifying unit 122-1 specifies the sheet metal processing machine 20 located closest to the starting point and the sheet metal processing machine 50 located closest to the destination point as new notification destination candidates, based on position information of the starting point and position information of the destination point in relation to traveling stored in the travel information storage unit 17-1. Since the notification information has already been transmitted to the sheet metal processing machine 20, the sheet metal processing machine 20 is excluded from the notification destination candidates, and only the sheet metal processing machine 50 is specified as a new notification destination.

When the notification destination specifying unit 122-1 specifies the sheet metal processing machine 50 as a new notification destination of the abnormal state, the notification information transmission control unit 123-1 causes the automated guided vehicle wireless communication unit 14-1 to transmit information for notifying the abnormal state to the sheet metal processing machine 50 (S4).

A processing machine wireless communication unit 53 of the sheet metal processing machine 50 receives the information transmitted from the automated guided vehicle 10-1, a processing machine display unit 54 displays the text information for notifying the abnormal state of the automated guided vehicle 10-1, based on the received information, and a processing machine alarm light 55 is turned on. If there is a worker in the periphery of the sheet metal processing machine 50, and the worker perceives the displayed information and performs an operation of handling the abnormality of the automated guided vehicle 10-1 within a predetermined time from when the automated guided vehicle 10-1 has transmitted the information for notifying the occurrence of the abnormality, the abnormality of the automated guided vehicle 10-1 is resolved ("YES" in S5). When the abnormality of the automated guided vehicle 10-1 is resolved, the detection state implemented by the abnormality detection sensor 13-1 enters an OFF state.

When the detection state implemented by the abnormality detection sensor 13-1 enters the OFF state, the automated guided vehicle alarm 18-1 stops sounding the alarm, the automated guided vehicle alarm light 19-1 is turned off, and the travel control unit 121-1 causes the vehicle to resume traveling. Further, when the detection state implemented by the abnormality detection sensor 13-1 enters the OFF state, the notification destination specifying unit 122-1 causes information for notifying the abnormality resolution of the automated guided vehicle 10-1 to be transmitted to the sheet metal processing machines 20, 30, 40, and 50 to which the information for notifying the abnormal state has been transmitted (S6), and the processing returns to step S2.

The processing machine wireless communication units 23, 33, 43, and 53 of the sheet metal processing machines 20, 30, 40, and 50 receive the information transmitted from the automated guided vehicle 10-1, the processing machine display units 24, 34, 44, and 54 stop displaying the text information for notifying the abnormal state of the automated guided vehicle 10-1, based on the received information, and the processing machine alarm lights 25, 35, 45, and 55 are turned off.

In step S5, if the abnormality of the automated guided vehicle 10-1 is not resolved within a predetermined time from when the automated guided vehicle 10-1 has transmitted the information for notifying the occurrence of the abnormality ("NO" in S5), the notification destination specifying unit 122-1 confirms whether the notification information has been transmitted to all of the sheet metal processing machines 20, 30, 40, and 50 (S7). If there is a sheet metal processing machine to which the notification information has not been transmitted at this point ("NO" in S7), the notification destination specifying unit 122-1 performs processing of transmitting the notification information to all sheet metal processing machines in the sheet metal processing facility according to (4) above.

Here, since the notification information has already been transmitted to all of the sheet metal processing machines 20, 30, 40, and 50 ("YES" in S7), the notification destination specifying unit 122-1 specifies the management device 60 as a notification destination. When the notification destination specifying unit 122-1 specifies the management device 60 as the notification destination of the abnormal state, the notification information transmission control unit 123-1 causes the automated guided vehicle wireless communication unit 14-1 to transmit the information for notifying the abnormal state of the automated guided vehicle 10-1 to the management device 60 (S9).

The management device 60 notifies a manager of the abnormal state of the automated guided vehicle 10-1 by outputting the information transmitted from the automated guided vehicle 10-1. The manager perceives the output information and performs processing for handling the abnormality of the automated guided vehicle 10-1. The automated guided vehicles 10-2 and 10-3 also perform processing similar to that of the automated guided vehicle 10-1 described above while traveling.

According to the above-described embodiment, the automated guided vehicles 10-1, 10-2, and 10-3 traveling in the sheet metal processing facility in which the plurality of sheet metal processing machines are installed include the abnormality detection sensors 13-1, 13-2, and 13-3 for detecting an abnormality that has occurred during traveling, the notification destination specifying units 122-1, 122-2, and 122-3 for specifying a sheet metal processing machine as the notification destination of the abnormal state, from the plurality of sheet metal processing machines when the abnormality detection sensors 13-1, 13-2, and 13-3 detect the abnormality, and the notification information transmission control units 123-1, 123-2, and 123-3 for wirelessly transmitting the information for notifying the abnormal state to the notification-destination sheet metal processing machine specified by the notification destination specifying units 122-1 122-2, and 122-3. Due to the automated guided vehicles 10-1, 10-2, and 10-3 having this kind of configuration, when an abnormality occurs in an automated guided vehicle traveling in the sheet metal processing facility and the vehicle stops, it is possible to promptly and efficiently notify workers in the periphery of the vehicle of the abnormal state without introducing an expensive management system. In the sheet metal processing facility, since there is a processing machine for which workers are likely to be arranged during operation according to the content of the processing, it is possible to promptly cause the automated guided vehicle to resume traveling by notifying the workers in the periphery of the stopped automated guided vehicle of the abnormal state and the workers performing handling processing.

Further, the automated guided vehicles 10-1, 10-2, 10-3 further include the position information acquiring units 15-1, 15-2, and 15-3 for acquiring current position information of the host-vehicles, the processing machine information storage units 16-1, 16-2, and 16-3 for storing information of the plurality of sheet metal processing machines, and the travel information storage units 17-1, 17-2, and 17-3 for storing travel information including position information of the starting point and position information of the destination point in relation to traveling. When the abnormality detection sensors 13-1, 13-2, and 13-3 detect an abnormality, the notification destination specifying units 122-1, 122-2, and 122-3 specify a sheet metal processing machine as a notification destination of the abnormal state, according to the current position information acquired by the position information acquiring units 15-1, 15-2, and 15-3, the information stored in the processing machine information storage units 16-1, 16-2, and 16-3, or the information stored in the travel information storage units 17-1, 17-2, and 17-3. Due to the automated guided vehicles 10-1, 10-2, 10-3 having this kind of configuration, when an abnormality occurs in an automated guided vehicle traveling in the sheet metal processing facility and the vehicle stops, it is possible to accurately determine a sheet metal processing machine which is located as close as possible to the automated guided vehicle and for which a worker is likely to be arranged and to specify a notification destination.

Further, in the above-described embodiment, a case has been described in which, as the notification destination of the abnormal state, a sheet metal processing machine is specified with a higher priority in order from (1) a sheet metal processing machine installed at a position closest to the position indicated by the current position information of the stopped automated guided vehicle, (2) a sheet metal processing machine for which a worker is arranged, (3) a sheet metal processing machine corresponding to the start position and a sheet metal processing machine corresponding to the end position in relation to traveling, and (4) all sheet metal processing machines in the sheet metal processing facility. However, the notification destination is not limited to the above, and a notification-destination sheet metal processing machine may be specified by means of at least one of the conditions (1) to (4) above. By using any one of these conditions, the occurrence of an abnormality of an automated guided vehicle can be efficiently notified to a worker in the periphery of the vehicle.

In addition, the notification destination specifying units 122-1, 122-2, and 122-3 may specify a sheet metal processing machine as a notification destination of the abnormal state, according to a condition set in advance for each time zone, each day of the week, each content of an abnormality that has occurred, each operation status of a sheet metal processing machine, or each combination of these. In this case, the conditions of (1) to (4) described above may be used, or the notification destination specifying units may specify a notification-destination sheet metal processing machine according to a specific condition with respect to a predetermined time zone, day of the week, content of the an abnormality that has occurred, or operation status of a sheet metal processing machine. For example, the notification destination specifying units 122-1, 122-2, and 122-3 determine that although no workers are arranged for almost all sheet metal processing machines on holidays and from 17:00 on weekdays, at least workers are arranged for a sheet metal processing machine corresponding to a start position and a sheet metal processing machine corresponding to an end position of the traveling of an automated guided vehicle in which an abnormality has occurred, and specify a notification destination according to the condition of (3) described above. Further, when the notification destination specifying units 122-1, 122-2, and 122-3 determine that the content of the occurred abnormality is due to an electrical failure inside the body of an automated guided vehicle, and that only a maintenance worker with specific knowledge can handle the abnormal state, the notification destination specifying units set only the management device 60 as a notification destination. Further, suppose that the notification destination specifying units 122-1, 122-2, and 122-3 acquire operation status information including NC button operation and operation screen touch history from processing control units 22, 32, 42, and 52 of the sheet metal processing machines 20, 30, 40, and 50 via the automated guided vehicle wireless communication units 14-1, 14-2, and 14-3, and based on the acquired information, perceive that the sheet metal processing machine 30 constituted by a bending processing machine is in the process of performing bending processing on a product for which 10-step bending processing is required, for example, and perceive that the sheet metal processing machine 30 is in the process of performing bending processing of the second step. In the above case, the notification destination specifying units determine that there is a high possibility that a worker is present in the periphery of the sheet metal processing machine 30 and specify the sheet metal processing machine 30 as a notification destination. By performing this kind of processing, it is possible to determine, with higher accuracy, a sheet metal processing machine for which a worker is highly likely to be arranged and specify a notification destination.

Further, in the above-described embodiment, when an abnormality is not resolved even after a predetermined time elapses from when information for notifying the abnormal state is transmitted to a specified notification-destination sheet metal processing machine, the notification destination specifying units 122-1, 122-2, and 122-3 change notification destination specifying conditions according to the priority order and specify a new notification-destination sheet metal processing machine. The notification information transmission control units 123-1, 123-2, and 123-3 wirelessly transmit the information for notifying the abnormal state to the specified sheet metal processing machine when the notification destination specifying units 122-1, 122-2, and 122-3 specify a new notification-destination sheet metal processing machine. Due to the automated guided vehicles 10-1, 10-2, and 10-3 having this kind of configuration, the occurrence of an abnormality in an automated guided vehicle can be reliably notified to a worker. In the embodiment described above, a case has been described in which the notification destination specifying conditions are changed according to a predetermined priority order using the conditions of (1) to (4) described above, but the method is not limited thereto, and a new notification destination may be specified using other conditions set in advance.

Further, in the embodiment described above, a case has been described in which, when an abnormality is detected in the automated guided vehicles 10-1, 10-2, and 10-3, information for notifying the abnormal state is directly transmitted from the automated guided vehicle 10-1, 10-2, or 10-3 to the sheet metal processing machines 20, 30, 40, and 50. However, the method is not limited thereto, and information for notifying an abnormal state and information on a notification-destination sheet metal processing machine may be transmitted from the automated guided vehicle 10-1, 10-2, or 10-3 to the management device 60, and the information for notifying the abnormal state may be transmitted from the management device 60 to the corresponding sheet metal processing machine.

## Claims

1. An automated guided vehicle (10-1) traveling in a sheet metal processing facility in which a plurality of sheet metal processing machines (20, 30, 40 and 50) are installed, the automated guided vehicle (10-1) comprising:
an abnormality detection sensor (13-1) for detecting an abnormality that has occurred in the automated guided vehicle (10-1) while the automated guided vehicle (10-1) is traveling;
a notification destination specifying unit (122-1) for specifying a sheet metal processing machine as a notification destination of a state of the abnormality, from the plurality of sheet metal processing machines (20, 30, 40 and 50) when the abnormality detection sensor (13-1) detects the abnormality;
a position information acquiring unit (15-1) for acquiring current position information of the automated guided vehicle;
a processing machine information storage unit (16-1) for storing information on the plurality of sheet metal processing machines (20, 30, 40 and 50); and
a travel information storage unit (17-1) for storing travel information including position information of a starting point and position information of a destination point in relation to traveling, wherein
the notification destination specifying unit (122-1) specifies a sheet metal processing machine as the notification destination of the abnormal state, according to the current position information acquired by the position information acquiring unit (15-1), the information stored in the processing machine information storage unit (16-1), the information stored in the travel information storage unit (17-1), and operation statuses of the sheet metal processing machines (20, 30, 40, 50), and wherein
the notification destination specifying unit (122-1) specifies, as an abnormal state notification destination, a sheet metal processing machine with a higher priority in order from a sheet metal processing machine installed at a position closest to the position indicated by current position information of the stopped automated guided vehicle, a sheet metal processing machine for which a worker is arranged, a sheet metal processing machine corresponding to a start position and a sheet metal processing machine corresponding to an end position in relation to traveling, and all sheet metal processing machines in the sheet metal processing facility; and
a notification information transmission control unit (123-1) for wirelessly transmitting information for notifying the state of the abnormality, to the sheet metal processing machine as the notification destination specified by the notification destination specifying unit (122-1).

2. The automated guided vehicle (10-1) according to claim 1, wherein the notification destination specifying unit (122-1) specifies the sheet metal processing machine as the notification destination of the state of the abnormality, according to a condition set in advance for each time zone, each day of the week, each content of an abnormality that has occurred, each operation status of a sheet metal processing machine, or each combination of these.

3. The automated guided vehicle (10-1) according to any one of claims 1 or 2, wherein,
the notification destination specifying unit (122-1) specifies a new sheet metal processing machine as a notification destination by changing a condition for specifying a notification destination when the abnormality is not resolved after a predetermined time elapses from when the information for notifying the state of the abnormality is transmitted to the specified sheet metal processing machine as the notification destination, and
the notification information transmission control unit (123-1) wirelessly transmits the information for notifying the state of the abnormality, to the specified sheet metal processing machine when the notification destination specifying unit (122-1) specifies the new sheet metal processing machine as the notification destination.

4. A conveying system (1) comprising:
the automated guided vehicle (10-1) according to any one of claims 1 to 3; and
the plurality of sheet metal processing machines (20, 30, 40 and 50), wherein
each of the plurality of sheet metal processing machines (20, 30, 40 and 50) includes an output unit (24 and 25) for outputting information transmitted from the automated guided vehicle (10-1).

5. An abnormality notification method of an automated guided vehicle (10-1) according to claim 1, the automated guided vehicle (10- 1) traveling in a sheet metal processing facility in which a plurality of sheet metal processing machines (20, 30, 40 and 50) are installed, and the abnormality notification method comprising:
when an abnormality occurs in the automated guided vehicle (10-1) while the automated guided vehicle (10-1) is traveling. specifying a sheet metal processing machine to which a state of the abnormality is notified from the plurality of sheet metal processing machines (20, 30, 40 and 50), wherein
a sheet metal processing machine is specified as the notification destination of the abnormal state, according to the current position information of the automated guided vehicle, information on the plurality of sheet metal processing machines (20, 30, 40 and 50), travel information including position information of a starting point and position information of a destination point in relation to traveling, and operation statuses of the sheet metal processing machines (20, 30, 40, 50), and
specifying, as an abnormal state notification destination, a sheet metal processing machine with a higher priority in order from a sheet metal processing machine installed at a position closest to the position indicated by current position information of the stopped automated guided vehicle, a sheet metal processing machine for which a worker is arranged, a sheet metal processing machine corresponding to a start position and a sheet metal processing machine corresponding to an end position in relation to traveling, and all sheet metal processing machines in the sheet metal processing facility; and
wirelessly transmitting information for notifying the state of the abnormality, to the specified sheet metal processing machine as a notification destination.

## Patentansprüche

1. Ein automatisch geführtes Fahrzeug (10-1), das sich in einer Blechbearbeitungsanlage bewegt, in der eine Vielzahl von Blechbearbeitungsmaschinen (20, 30, 40 und 50) installiert sind, wobei das automatisch geführte Fahrzeug (10-1) aufweist:
einen Sensor (13-1) zur Erkennung von Anomalien, um eine Anomalie zu erkennen, die in dem automatisch geführten Fahrzeug (10-1) aufgetreten ist
während das automatisch geführte Fahrzeug (10-1) fährt;
eine Benachrichtigungsziel-Spezifizierungseinheit (122-1) zum Spezifizieren einer Blechbearbeitungsmaschine als Benachrichtigungsziel für einen Zustand der Anomalie,
aus der Vielzahl von Blechbearbeitungsmaschinen (20, 30, 40 und 50), wenn der Sensor (13-1) zur Erkennung von Anomalien die Anomalie erkennt;
eine Positionsinformationserfassungseinheit (15-1) zum Erfassen der aktuellen Positionsinformation des automatisch geführten Fahrzeugs;
eine Bearbeitungsmaschinen-Informationsspeichereinheit (16-1) zum Speichern von Informationen über die Vielzahl von Blechbearbeitungsmaschinen (20, 30, 40 und 50); und
eine Reiseinformations-Speichereinheit (17-1) zum Speichern von Reiseinformationen, die Positionsinformationen eines Startpunktes und Positionsinformationen eines Zielpunktes in Bezug auf das Fahren aufweisen, wobei
die Benachrichtigungsziel-Spezifizierungseinheit (122-1) eine Blechbearbeitungsmaschine als das Benachrichtigungsziel des anormalen Zustands spezifiziert, gemäß der aktuellen Positionsinformation, die durch die Positionsinformationserfassungseinheit (15-1) erfasst wird, der Information, die in der Bearbeitungsmaschinen-Informationsspeichereinheit (16-1) gespeichert ist, der Information, die in der Reiseinformations-Speichereinheit (17-1) gespeichert ist, und Betriebszuständen der Blechbearbeitungsmaschinen (20, 30, 40, 50), und wobei
die Benachrichtigungsziel-Spezifizierungseinheit (122-1) eine Blechbearbeitungsmaschine als einen abnormalen Zustand spezifiziert
eine Blechbearbeitungsmaschine mit einer höheren Priorität in der Reihenfolge von einer Blechbearbeitungsmaschine, die an einer Position installiert ist, die am nächsten zu der Position liegt, die durch die aktuelle Positionsinformation des angehaltenen automatisch geführten Fahrzeugs angezeigt wird, einer Blechbearbeitungsmaschine, für die ein Arbeiter angeordnet ist, einer Blechbearbeitungsmaschine, die einer Startposition entspricht, und einer Blechbearbeitungsmaschine, die einer Endposition in Bezug auf das Fahren entspricht, und allen Blechbearbeitungsmaschinen in der Blechbearbeitungsanlage; und
eine Benachrichtigungsinformationsübertragungssteuereinheit (123-1) zum drahtlosen Übertragen von Informationen zur Benachrichtigung über den Zustand der Abnormalität an die Blechbearbeitungsmaschine als das von der Benachrichtigungsziel-Spezifizierungseinheit (122-1) spezifizierte Benachrichtigungsziel.

2. Das automatisch geführte Fahrzeug (10-1) nach Anspruch 1, wobei
die Benachrichtigungsziel-Spezifizierungseinheit (122-1) die Blechbearbeitungsmaschine als das Benachrichtigungsziel des Zustands der Abnormalität spezifiziert, gemäß einer Bedingung, die im Voraus für jede Zeitzone, jeden Wochentag, jeden Inhalt einer aufgetretenen Abnormalität, jeden Betriebszustand einer Blechbearbeitungsmaschine oder jede Kombination davon festgelegt wurde.

3. Das automatisch geführte Fahrzeug (10-1) nach einem der Ansprüche 1 oder 2, wobei die Benachrichtigungsziel-Spezifizierungseinheit (122-1) eine neue Blechbearbeitungsmaschine als ein Benachrichtigungsziel spezifiziert, indem sie eine Bedingung zum Spezifizieren eines Benachrichtigungsziels ändert, wenn die Abnormalität nicht behoben ist, nachdem eine vorbestimmte Zeit ab dem Zeitpunkt verstrichen ist, zu dem die Information zum Benachrichtigen des Zustands der Abnormalität an die spezifizierte Blechbearbeitungsmaschine als das Benachrichtigungsziel übertragen wird, und
die Benachrichtigungsinformationsübertragungssteuereinheit (123-1) drahtlos die Information zur Benachrichtigung über den Zustand der Abnormalität an die spezifizierte Blechbearbeitungsmaschine überträgt, wenn die Benachrichtigungszielspezifizierungseinheit (122-1) die neue Blechbearbeitungsmaschine als das Benachrichtigungsziel spezifiziert.

4. Ein Fördersystem (1), aufweisend:
das automatisch geführte Fahrzeug (10-1) nach einem der Ansprüche 1 bis 3; und die Vielzahl von Blechbearbeitungsmaschinen (20, 30, 40 und 50), wobei
jede der Vielzahl von Blechbearbeitungsmaschinen (20, 30, 40 und 50) eine Ausgabeeinheit (24 und 25) zur Ausgabe von Informationen aufweist, die von dem automatisch geführten Fahrzeug (10-1) übertragen werden.

5. Ein Verfahren zur Meldung von Anomalien eines automatisch geführten Fahrzeugs (10-1 ) nach Anspruch 1, wobei das automatisch geführte Fahrzeug (10-1) in einer Blechbearbeitungsanlage fährt, in der eine Vielzahl von Blechbearbeitungsmaschinen (20, 30, 40 und 50) installiert sind, und das Verfahren zur Meldung von Anomalien aufweist:
wenn eine Abnormalität in dem automatisch geführten Fahrzeug (10-1) auftritt, während das automatisch geführte Fahrzeug (10-1) unterwegs ist
Spezifizieren einer Blechbearbeitungsmaschine, der ein Zustand der Abnormalität mitgeteilt wird, aus der Vielzahl von Blechbearbeitungsmaschinen (20, 30, 40 und 50), wobei
eine Blechbearbeitungsmaschine als das Meldeziel des abnormalen Zustands spezifiziert wird, gemäß den aktuellen Positionsinformationen des automatisch geführten Fahrzeugs, Informationen über die Vielzahl von Blechbearbeitungsmaschinen (20, 30, 40 und 50), Fahrinformationen einschließlich Positionsinformationen eines Startpunkts und Positionsinformationen eines Zielpunkts in Bezug auf die Fahrt und Betriebszustände der Blechbearbeitungsmaschinen (20, 30, 40, 50), und
Festlegen einer Blechbearbeitungsmaschine mit einer höheren Priorität in der Reihenfolge von einer Blechbearbeitungsmaschine, die an einer Position installiert ist, die am nächsten zu der Position liegt, die durch die aktuelle Positionsinformation des angehaltenen automatisch geführten Fahrzeugs angegeben ist, einer Blechbearbeitungsmaschine, für die ein Arbeiter angeordnet ist, einer Blechbearbeitungsmaschine, die einer Startposition entspricht, und einer Blechbearbeitungsmaschine, die einer Endposition in Bezug auf die Fahrt entspricht, und allen Blechbearbeitungsmaschinen in der Blechbearbeitungsanlage als ein Ziel für eine Benachrichtigung über einen anormalen Zustand; und
drahtloses Übertragen von Informationen zur Benachrichtigung über den Zustand der Abnormalität an die spezifizierte Blechbearbeitungsmaschine als ein Benachrichtigungsziel.

## Revendications

1. Véhicule à guidage automatique (10-1) circulant dans une installation d'usinage de tôles dans laquelle sont installées plusieurs machines d'usinage de tôles (20, 30, 40 et 50), le véhicule à guidage automatique (10-1) comprenant:
un capteur de détection d'anomalie (13-1) pour détecter une anomalie qui s'est produite dans le véhicule à guidage automatique (10-1) pendant que le véhicule à guidage automatique (10-1) se déplace;
une unité de spécification de destination de notification (122-1) pour spécifier une machine d'usinage de tôles comme destination de notification d'un état de l'anomalie, parmi la pluralité de machines d'usinage de tôles (20, 30, 40 et 50) lorsque le capteur de détection d'anomalie (13-1) détecte l'anomalie;
une unité d'acquisition d'informations de position (15-1) pour acquérir des informations de position actuelle du véhicule à guidage automatique;
une unité de stockage d'informations sur les machines d'usinage (16-1) pour stocker des informations sur la pluralité de machines d'usinage de tôles (20, 30, 40 et 50); et
une unité de stockage d'informations de déplacement (17-1) pour stocker des informations de déplacement comprenant des informations de position d'un point de départ et des informations de position d'un point de destination en relation avec le déplacement, dans laquelle
l'unité de spécification de la destination de notification (122-1) spécifie une machine d'usinage de tôles comme destination de notification de l'état anormal, en fonction des informations de position actuelle acquises par l'unité d'acquisition d'informations de position (15-1), des informations stockées dans l'unité de stockage d'informations sur les machines d'usinage (16-1), des informations stockées dans l'unité de stockage d'informations de déplacement (17-1) et des états de fonctionnement des machines d'usinage de tôles (20, 30, 40, 50), et dans lequel l'unité de spécification de destination de notification (122-1) spécifie, comme destination de notification d'état anormal, une machine d'usinage de tôles de priorité plus élevée dans l'ordre suivant: une machine d'usinage de tôles installée à une position la plus proche de la position indiquée par les informations de position actuelle du véhicule à guidage automatique arrêté, une machine d'usinage de tôles à laquelle un technicien est affecté, une machine d'usinage de tôles correspondant à une position de départ et une machine d'usinage de tôles correspondant à une position d'arrivée par rapport au déplacement, et toutes les machines d'usinage de tôles dans l'installation d'usinage de tôles; et
une unité de commande de transmission d'informations de notification (123-1) pour transmettre sans fil des informations afin de notifier l'état de l'anomalie à la machine d'usinage de tôles en tant que destination de notification spécifiée par l'unité de spécification de destination de notification (122-1).

2. Véhicule à guidage automatique (10-1) selon la revendication 1, dans lequel l'unité de spécification de destination de notification (122-1) spécifie la machine d'usinage de tôles comme destination de notification de l'état d'anomalie, selon une condition définie à l'avance pour chaque fuseau horaire, chaque jour de la semaine, chaque contenu d'une anomalie qui s'est produite, chaque état de fonctionnement d'une machine d'usinage de tôles, ou chaque combinaison de ceux-ci.

3. Véhicule à guidage automatique (10-1) selon l'une quelconque des revendications 1 ou 2, dans lequel l'unité de spécification de la destination de notification (122-1) spécifie une nouvelle machine d'usinage de tôles comme destination de notification en modifiant une condition de spécification d'une destination de notification lorsque l'anomalie n'est pas résolue après un délai prédéterminé à compter du moment où les informations de notification de l'état de l'anomalie sont transmises à la machine d'usinage de tôles spécifiée comme destination de notification, et
l'unité de commande de transmission d'informations de notification (123-1) transmet sans fil les informations pour notifier l'état de l'anomalie à la machine de traitement de tôle spécifiée lorsque l'unité de spécification de destination de notification (122-1) spécifie la nouvelle machine de traitement de tôle comme destination de notification.

4. Système de transport (1) comprenant:
le véhicule à guidage automatique (10-1) selon l'une quelconque des revendications 1 à 3; et la pluralité de machines d'usinage de tôles (20, 30, 40 et 50), dans lequel chacune de la pluralité de machines d'usinage de tôles (20, 30, 40 et 50) comprend une unité de sortie (24 et 25) pour sortir les informations transmises depuis le véhicule à guidage automatique (10-1).

5. Procédé de notification d'anomalie d'un véhicule à guidage automatique (10-1) selon la revendication 2, le véhicule à guidage automatique (10-1) se déplaçant dans une installation d'usinage de tôles dans laquelle une pluralité de machines d'usinage de tôles (20, 30, 40 et 50) sont installées, et le procédé de notification d'anomalie comprenant:
lorsqu'une anomalie se produit dans le véhicule à guidage automatique (10-1) pendant que le véhicule à guidage automatique (10-1) se déplace, la spécification d'une machine d'usinage de tôles à laquelle un état d'anomalie est notifié parmi la pluralité de machines d'usinage de tôles (20, 30, 40 et 50), dans lequel une machine d'usinage de tôles est spécifiée comme destination de notification de l'état anormal, en fonction des informations de position actuelle du véhicule à guidage automatique, des informations sur la pluralité de machines d'usinage de tôles (20, 30, 40 et 50), des informations de déplacement comprenant les informations de position d'un point de départ et les informations de position d'un point de destination par rapport au déplacement, et des états de fonctionnement des machines d'usinage de tôles (20, 30, 40, 50) sont spécifiées, et
en spécifiant, comme destination de notification d'état anormal, une machine d'usinage de tôles de priorité plus élevée dans l'ordre à partir d'une machine d'usinage de tôles installée à une position la plus proche de la position indiquée par les informations de position actuelle du véhicule à guidage automatique arrêté, une machine d'usinage de tôles pour laquelle un ouvrier est affecté, une machine d'usinage de tôles correspondant à une position de départ et une machine d'usinage de tôles correspondant à une position d'arrivée par rapport au déplacement, et toutes les machines d'usinage de tôles dans l'installation d'usinage de tôles; et
transmettre sans fil des informations pour notifier l'état de l'anomalie à la machine d'usinage de tôles spécifiée comme destination de notification.
